(19) **Europäisches Patentamt European Patent Office Office européen des brevets**

(11) **EP 0 753 771 B1**

(12) **FASCICULE DE BREVET EUROPEEN**

(45) Date de publication et mention
de la délivrance du brevet:
**03.01.2007 Bulletin 2007/01**

(51) Int Cl.:
***G02B 6/02*** *(2006.01)*  ***G02B 6/036*** *(2006.01)*

(21) Numéro de dépôt: **96401478.1**

(22) Date de dépôt: **04.07.1996**

(54) **Guide optique monomode à dispersion décalée et grande surface effective de mode**

Monomodaler dispersionsverschobener optischer Wellenleiter mit grosser effektiver Modenfläche

Monomodal dispersion-shifted optical guide with large effective mode surface

(84) Etats contractants désignés:
**DE GB IT**

(30) Priorité: **07.07.1995 FR 9508252**

(43) Date de publication de la demande:
**15.01.1997 Bulletin 1997/03**

(73) Titulaire: **Draka Comteq B.V.**
**1018 TX Amsterdam (NL)**

(72) Inventeurs:
 • **Nouchi, Pascale**
  **91140 Villebon sur Yvette (FR)**
 • **Sansonetti, Pierre**
  **91120 Palaiseau (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 341 427**      **DE-A- 2 426 376**

• **IEEE PHOTONICS TECHNOLOGY LETTERS, vol. 4, no. 6, 1 Juin 1992, pages 638-641, XP000275552 YANGSHENG GAO ET AL: "ATTENUATION-OPTIMIZED DISPERSION-FLATTENED QUADRUPLE-CLAD FIBERS WITH MODERATE F-DOPING IN THE FIRST INNER CLADDING"**
• **LASER FOCUS WORLD, vol. 26, no. 2, 1 Février 1990, page 121 XP000100668 HOLMES L M: "SPECIAL PROFILE NULLS FIBER DISPERSION AT TWO WAVELENGTHS"**
• **JOURNAL OF LIGHTWAVE TECHNOLOGY, vol. 4, no. 11, 1 Novembre 1986, pages 1651-1654, XP000541249 RUHL F: "CUTOFF DECOMPOSITION ON MULTIPLY CLAD FIBERS"**

**Description**

La présente invention concerne de manière générale un guide optique monomode, tel que fibre optique, typiquement destiné à être utilisé comme liaison de transmission à longue distance. L'invention trouve application notamment dans les liaisons sous-marines. Plus précisément, l'invention a trait à une fibre optique monomode à dispersion décalée à grande surface effective de mode.

Une fibre optique monomode dite à dispersion décalée est telle qu'à la longueur d'onde de transmission à laquelle elle est utilisée, la dispersion chromatique de l'onde transmise est sensiblement nulle. Il peut être montré que dans la silice, à la longueur d'onde $\lambda$ égale à 1,27 $\mu$m, et seulement à cette longueur d'onde, la dispersion chromatique est nulle. Néanmoins, pour une fibre destinée à établir une liaison longue distance, il est plus avantageux de transmettre à une longueur d'onde $\lambda$=1,55 $\mu$m car il en résulte alors une atténuation minimale de transmission de la lumière. Pour $\lambda$=1,55 $\mu$m, il est en contrepartie nécessaire de compenser la dispersion chromatique non nulle de la silice notamment par une structure appropriée des coeur et gaine de la fibre optique. La terminologie "fibre optique à dispersion décalée" est utilisée pour définir une fibre dans laquelle la dispersion chromatique est rendue sensiblement nulle par compensation de la dispersion chromatique intrinsèque de la silice apparaissant pour une longueur d'onde différente de 1,27 $\mu$m.

La surface effective de mode Seff d'une fibre est définie par:

$$Seff = \frac{2\pi\left(\int_0^\infty \Psi^2(r).r.dr\right)^2}{\int_0^\infty \Psi^4(r).r.dr}$$

où $\Psi(r)$ est une fonction scalaire de distribution de champ dans la fibre et r désigne la distance polaire, en coordonnées polaires, d'un point dans un repère transversal à et centré par rapport à la fibre. Il est montré que la qualité de transmission dans la fibre est d'autant meilleure que la surface effective de mode Seff est grande. Ainsi, pour améliorer la qualité de transmission dans la fibre, ce qui a pour avantage de diminuer le nombre de répéteurs sur la liaison et donc le coût de l'installation, il est particulièrement avantageux d'avoir une surface effective de mode la plus élevée possible.

Selon la technique antérieure, deux profils d'indice existent pour la réalisation d'une fibre monomode à dispersion décalée et grande surface effective de mode. Ces profils sont appelés respectivement "profil à trapèze + anneau" et "profil à zone centrale enterrée + anneau". Un profil définit un diagramme de niveau d'indice dans les coeur et gaine de la fibre en fonction de la distance polaire par rapport au point central de la fibre. Le niveau d'indice est fonction uniquement de cette distance et ne dépend pas de la coordonnée angulaire, l'axe central de la fibre définissant un axe de révolution pour chaque couche du coeur et de la gaine.

Le document "Attenuation-optimized dispersion-flattened quadruple-clad fibers with moderate F-doping in the first inner cladding" publié dans "IEEE Photonics Technology Letters, volume 4, no. 6, 1 juin 1992, pages 638 - 641, définit un guide optique monomode à dispersion décalée comprenant une gaine ayant un indice de réfraction prédéterminé et un coeur comprenant une zone centrale ayant un indice de réfraction supérieur à l'indice de réfraction de la gaine, une première zone annulaire qui est périphérique à la zone centrale et qui a un indice de réfraction inférieur à l'indice de réfraction de la gaine, une deuxième zone annulaire qui est périphérique à la première zone annulaire et qui a un indice de réfraction supérieur à l'indice de réfraction de la gaine, et une troisième zone annulaire qui est périphérique à la deuxième zone annulaire et qui a un indice de réfraction inférieur à l'indice de réfraction de la gaine.

Le document montre le profil de l'indice de réfraction d'une réalisation d'un guide optique pareil où l'indice de réfraction dans la zone centrale est variable en fonction d'une distance polaire définié par rapport au centre du guide de telle façon que l'indice de réfraction est supérieur à l'indice de réfraction de la gaine sauf dans le domaine tout près le centre du guide où l'indice de réfraction est inférieur à l'indice de réfraction de la gaine.

Le profil dit à "trapèze + anneau", décrit dans la demande de brevet français N° 94-10615, définit une fibre comprenant:

- une gaine ayant un indice de réfraction prédéterminé, et
- un coeur comprenant, d'une part, une zone centrale ayant un indice de réfraction qui est supérieur à l'indice de réfraction de la gaine et qui décroît à partir d'une valeur de distance polaire donnée pour atteindre l'indice de réfraction de la gaine et, d'autre part, un anneau périphérique à la zone centrale, qui possède un indice de réfraction supérieur à l'indice de réfraction de la gaine et qui est séparé de cette zone centrale par une zone-créneau

d'indice de réfraction égal à l'indice de réfraction de la gaine.

Ce profil à "trapèze + anneau" offre une surface effective de mode Seff pouvant atteindre 85 $\mu$m². Les fibres définissant un tel profil présentent néanmoins l'inconvénient majeur d'être sujettes aux pertes par microcourbures.

Le profil dit à "zone centrale enterrée + anneau", décrit dans le document intitulé "Transmission Characteristics of a Coaxial Optical Fiber Line" publié dans le "Journal of lightwave technology, vol.11, n°11, novembre 1993, pages 1717-1720", définit une fibre comprenant:

- une gaine ayant un indice de réfraction prédéterminé, et
- un coeur comprenant, d'une part, une zone centrale ayant un indice de réfraction inférieur à l'indice de réfraction de la gaine et, d'autre part, une zone annulaire qui est périphérique à la zone centrale et qui a un indice de réfraction supérieur à l'indice de réfraction de la gaine.

Ce profil à "zone centrale enterrée + anneau" offre une surface effective de mode Seff pouvant atteindre 90 $\mu$m². Les fibres utilisant un tel profil n'apparaissent néanmoins pas optimales en raison des pertes intrinsèques importantes qui sont induites par les différences d'indice élevées.

Ainsi, selon la technique antérieure, les deux types de fibre à dispersion décalée et grande surface effective de mode ne donnent pas entière satisfaction eu égard à leur comportement en terme d'affaiblissement, qu'il s'agisse de pertes par microcourbures ou pertes intrinsèques. L'invention vise donc à remédier à ces inconvénients en fournissant une fibre optique à dispersion décalée et grande surface effective de mode qui possède des propriétés tout à fait satisfaisantes pour tous les paramètres d'affaiblissement.

A cette fin, un guide optique monomode comprenant:

- un coeur optique, et
- une gaine enveloppant le coeur optique et définie par un indice de réfraction prédéterminé,

le coeur comprenant, d'une part, une zone centrale ayant un indice de réfraction constant inférieur audit indice de réfraction prédéterminé et, d'autre part, une zone annulaire qui est périphérique à ladite zone centrale et qui a un indice de réfraction supérieur audit indice de réfraction prédéterminé,

est caractérisé, selon l'invention, en ce que le coeur comprend, en outre, entre la zone annulaire périphérique et la gaine, au moins une zone composée annulaire qui est constituée de deux zones annulaires successives ayant respectivement des indices de réfraction inférieur et supérieur audit indice de réfraction prédéterminé.

Il peut être prévu que dans au moins l'une des zones centrale et annulaires, l'indice de réfraction est variable en fonction d'une distance polaire définie par rapport au centre du guide.

D'autres caractéristiques et avantages de la présente invention apparaîtront plus clairement à la lecture de la description suivante, en référence aux dessins annexés correspondants, dans lesquels:

- la figure 1 montre une vue en coupe transversale d'un guide optique monomode selon l'invention;
- la figure 2 est, selon une première variante de l'invention, un diagramme de profil d'indice selon l'invention qui est associé au guide montré à la figure 1; et
- la figure 3 est, selon une seconde variante de l'invention, un diagramme de profil d'indice selon l'invention qui est associé au guide montré à la figure 1.

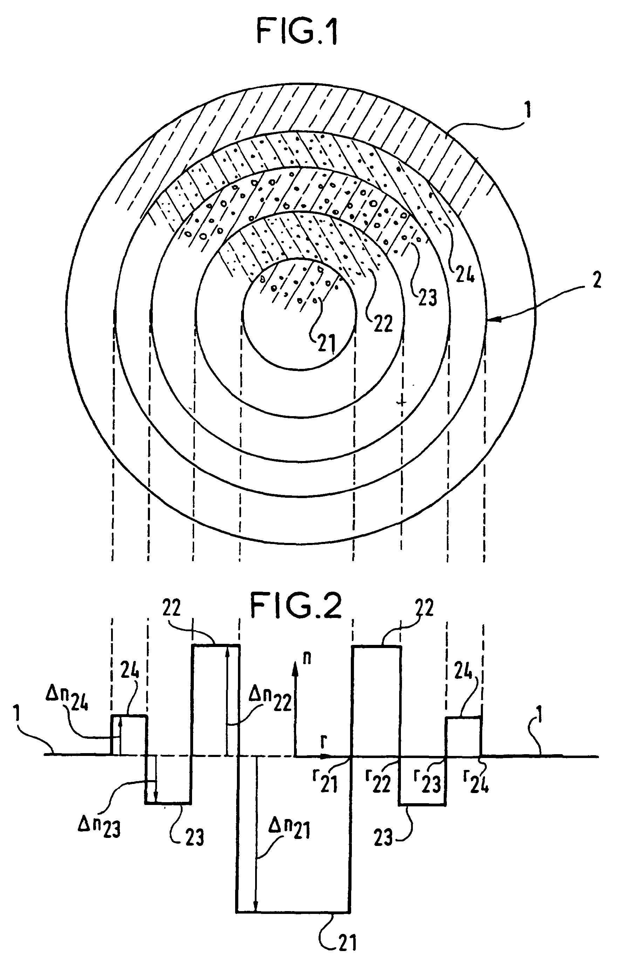

En référence à la figure 1, un guide optique monomode, ou fibre optique, selon l'invention, fait apparaître en coupe transversale une gaine optique 1 enveloppant un coeur optique 2. Le coeur optique 2 se compose d'une zone centrale circulaire 21 enveloppée par trois zones annulaires concentriques successives 22, 23 et 24. La fibre optique résulte de la traction de matière d'une préforme obtenue par des dépôts successifs de couches de silice convenablement dopée. Selon une variante de l'invention illustrée dans la figure 2 représentant le niveau d'indice n en fonction de la distance r en coordonnées polaires par rapport au centre de la fibre, la zone centrale 21 possède un indice de réfraction constant inférieur à l'indice de réfraction de la gaine 1 et la première zone annulaire concentrique 22, qui est périphérique à la zone centrale, a un indice de réfraction constant supérieur à l'indice de réfraction de la gaine 1. Par ailleurs, entre la zone annulaire périphérique 22 et la gaine 1, est prévue une zone composée annulaire constituée des deux zones concentriques annulaires successives 23 et 24, dites intérieure et extérieure, ayant respectivement des indices de réfraction constants inférieur et supérieur à l'indice de réfraction de la gaine 1. Ainsi, l'invention se distingue de la technique antérieure décrite dans le document précité "Transmission Characteristics of a Coaxial Optical Fiber Line" par cette zone composée annulaire constituée des deux zones concentriques annulaires successives intérieure et extérieure 23 et 24 ayant respectivement des indices de réfraction inférieur et supérieur à l'indice de réfraction de la gaine 1. La propriété physique à l'origine de l'avantage considérable procuré par l'invention est la suivante. Il est montré que la dispersion chromatique M d'une fibre optique est en bonne approximation donnée par la somme de la dispersion matériau M1, égale à la dispersion obtenue pour une onde plane dans un milieu homogène d'indice donné, et la dispersion de guide M2, égale à la dispersion obtenue lorsque l'on néglige la dépendance des valeurs d'indice en fonction de la longueur d'onde. Cela s'écrit :

$$M = M1 + M2.$$

Il est en outre montré que:

$$M1 = -\lambda/c.(\partial^2 n/\partial\lambda^2),$$

et

$$M2 = - [\Delta n/\lambda c].V(\partial^2(VB)/\partial V^2),$$

où $\lambda$ est la longueur d'onde de l'onde lumineuse sensiblement égale à 1,55 $\mu$m, c est la vitesse de la lumière, n est une variable de valeur d'indice, $\Delta$n est la différence d'indice entre l'indice maximal du coeur et l'indice de la gaine et $V(\partial^2(VB)/\partial V^2)$ est un terme caractérisant la dispersion de guide, V étant la fréquence normalisée et B l'indice effectif normalisé, l'indice effectif étant l'indice "vu" par l'onde lumineuse se propageant dans le coeur. Pour conférer à la fibre une dispersion chromatique nulle, il est nécessaire de rendre nulle la valeur prise par la somme (M1 + M2), et donc de compenser la valeur M1 par une valeur M2 de même valeur absolue et de signe opposé. Dans le document précité "Transmission Characteristics of a Coaxial Optical Fiber Line", la fibre optique décrite est telle que la valeur prise par $V(\partial^2(VB)/\partial V^2)$ dans l'égalité:

$$M2 = - [\Delta n/\lambda c].V(\partial^2(VB)/\partial V^2),$$

est faible, ce qui impose d'augmenter $\Delta$n en vue de compenser la valeur de M1 par la valeur de M2. or une différence d'indice importante entre le coeur et la gaine de la fibre optique induit des pertes intrinsèques importantes.
Dans le cadre de l'invention, la valeur prise par $V(\partial^2(VB)/\partial V^2)$ est suffisamment élevée pour ne pas recourir à une différence d'indice $\Delta$n importante entre les coeur et gaine de la fibre. Il en résulte alors des pertes intrinsèques beaucoup moins importantes.
A titre d'exemple non limitatif, une réalisation d'un guide optique selon l'invention peut être donnée. Dans cette réalisation, comme illustré dans la figure 2, ont été choisies les notations $\Delta n_i$ et $r_i$ pour désigner respectivement une variation d'indice par rapport à l'indice de la gaine 1, et un rayon mesuré en un point d'extrémité de chacune des zones formant le coeur 2, i désignant l'indice identifiant chacune des zones 21, 22, 23 et 24. La réalisation donne :

$$\Delta n_{21} = -5,5.10^{-3}, \Delta n_{22} = 11.10^{-3}, \Delta n_{23} = -5,5.10^{-3}, \Delta n_{24} = 5,5.10^{-3},$$

et

$$r_{21} = 2,1 \ \mu m, \ r_{22} = 4,2 \ \mu m, \ r_{23} = 7,06 \ \mu m \ et \ r_{24} = 8,4 \ \mu m$$

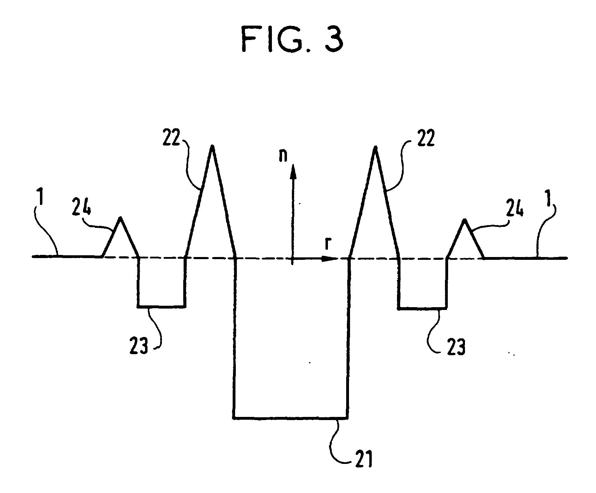

Le profil d'indice proposé par l'invention confère à la fibre optique une surface effective de mode sensiblement égale à 85 $\mu$m$^2$.
En variante de la figure 2, le profil d'indice montré à la figure 3 est tel que dans chacune des deux zones 22 et 24, l'indice de réfraction n est variable, en triangle, en fonction de la distance polaire r tout en restant supérieur à l'indice de réfraction de la gaine 1. Cette variante n'est pas limitative, et l'invention prévoit que l'indice de réfraction dans au moins une zone 22, 23 et 24 peut être variable en fonction de la distance polaire r selon une géométrie donnée telle que triangle, losange, courbe en ogive, etc.. Les caractéristiques suivantes sont néanmoins respectées. Dans les zones 21 et 23, l'indice de réfraction du coeur reste supérieur à l'indice de réfraction de la gaine 1. Dans les zones 22 et 24, l'indice de réfraction du coeur reste inférieur à l'indice de réfraction de la gaine 1.

Bien que la description qui précède se limite à considérer une seule zone composée annulaire constituée des deux zones concentriques annulaires successives 23 et 24 ayant respectivement des indices de réfraction inférieur et supérieur à l'indice de réfraction de la gaine 1, il peut être prévu plusieurs zones composées annulaires successives chacune constituée de deux zones concentriques annulaires intérieure et extérieure ayant respectivement des indices de réfraction inférieur et supérieur à l'indice de réfraction de la gaine 1.

Un autre avantage important résultant de l'invention est la faible pente spectrale de dispersion chromatique obtenue, par exemple égale à 0,065 ps/nm$^2$/km dans l'exemple de réalisation donné précédemment. Cela signifie que la dispersion chromatique M fluctue peu en fonction de la longueur d'onde $\lambda$ utilisée, ce qui offre une possibilité de multiplexage en longueur d'onde, typiquement à des longueurs d'onde voisines de $\lambda$=1, 55 $\mu$m.

## Revendications

1.  Guide optique monomode comprenant:

    - un coeur optique (2), et
    - une gaine (1) enveloppant ledit coeur optique (2) et définie par un indice de réfraction prédéterminé,

    ledit coeur optique (2) comprenant, d'une part, un zone centrale (21) ayant un indice de réfraction constant inférieur audit indice de réfraction prédéterminé et, d'autre part, une zone annulaire (22) qui est périphérique à ladite zone centrale (21) et qui a un indice de réfraction supérieur audit indice de réfraction prédéterminé, **caractérisé en ce que** le coeur comprend en outre, entre ladite zone annulaire périphérique (22) et ladite gaine (1), au moins une zone composée annulaire qui est constituée de deux zones annulaire successives (23, 24) ayant respectivement des indices de réfraction inférieur et supérieur audit indice de réfraction prédéterminé.

2.  Guide optique monomode conforme à la revendication 1, **caractérisé en ce que** dans au moins l'une desdites zones annulaires (22, 23, 24), l'indice de réfraction est variable en fonction d'une distance polaire définie par rapport au centre du guide optique.

## Claims

1.  Single-mode optical guide comprising:

    - an optical core (2) and
    - a cladding (1) enveloping said optical core (2) and defined by a predetermined refractive index,

    said optical core (2) comprising, on the one hand, a central zone (21) having a constant refractive index less than said predetermined refractive index and, on the other hand, an annular zone (22) which is peripheral to said central zone (21) and which has a refractive index greater than said predetermined refractive index, **characterised in that** the core additionally comprises, between said peripheral annular zone (22) and said cladding (1), at least one composite annular zone which is composed of two successive annular zones (23, 24) having refractive indices less than and greater than said predetermined refractive index, respectively.

2.  Single-mode optical guide in accordance with claim 1, **characterised in that**, in at least one of said annular zones (22, 23, 24), the refractive index is variable as a function of a polar distance defined with respect to the centre of the optical guide.

## Patentansprüche

1.  Monomodaler optischer Wellenleiter umfassend:

    - einen optischen Kern (2) und
    - eine Ummantelung (1), die den optischen Kern (1) umhüllt und durch einen vorbestimmten Brechungsindex definiert ist,

wobei der optische Kern (2) zum einen einen zentralen Bereich (21) mit einem konstanten Brechungsindex, der niedriger als der vorbestimmte Brechungsindex ist, und zum anderen einen den zentralen Bereich (21) umgebenden ringförmigen Bereich (22) mit einem Brechungsindex, der höher als der vorbestimmte Brechungsindex ist, aufweist, **dadurch gekennzeichnet, dass** der Kern zudem zwischen dem ringförmigen Umgebungsbereich (22) und der Ummantelung (1) mindestens einen zusammengesetzten ringförmigen Bereich aufweist, der aus zwei aufeinander folgenden ringförmigen Bereichen (23, 24) mit jeweiligen Brechungsindices, die niedriger bzw. höher als der vorbestimmte Brechungsindex sind, besteht.

2. Monomodaler optischer Wellenleiter nach Anspruch 1, **dadurch gekennzeichnet, dass** in mindestens einem der ringförmigen Bereiche (22, 23, 24) der Brechungsindex variabel ist, abhängig von einem definierten polaren Abstand in Bezug auf die Mittellinie des optischen Wellenleiters.

# FIG.1

# FIG.2

# FIG. 3